# EUROPÄISCHE PATENTSCHRIFT

(11) **EP 1 015 846 B1**
(45) Veröffentlichungstag und Bekanntmachung des Hinweises auf die Patenterteilung: **14.05.2003**
(21) Anmeldenummer: 98951389.0
(22) Anmeldetag: 12.09.1998
(51) Int. Cl.: G01B 17/02

(54) **ULTRASCHALLMESSGERÄT MIT SENDER UND EMPFÄNGER FÜR DIE ORTUNG DER GEOMETRISCHEN LAGE DER GRENZE ZWISCHEN EINEM ERSTEN UND EINEM ZWEITEN STOFF VON EINEM BEZUGSORT**
Ultrasonic sensor with a transmitter and a receiver for locating the geometrical boundary between two materials from a reference point.
DISPOSITIF DE MESURE ULTRASONORE AVEC EMETTEUR ET RECEPTEUR POUR LA LOCALISATION DE LA POSITION GEOMETRIQUE DE L'INTERFACE ENTRE UN PREMIER ET UN DEUXIEME MATERIAU A PARTIR D'UN EMPLACEMENT DE REFERENCE

(30) Priorität: 20.09.1997 DE 19741586
(43) Veröffentlichungstag der Anmeldung: 05.07.2000
(73) Patentinhaber: INOEX GmbH, 32547 Bad Oeynhausen (DE)
(72) Erfinder: SCHULZE, Torsten, D-32549 Bad Oeynhausen (DE)
(74) Vertreter: Knauf, Rudolf, Dipl.-Ing.
(86) Internationale Anmeldenummer: EP9805819
(87) Internationale Veröffentlichungsnummer: WO99015855

(56) Entgegenhaltungen:
- DE-A- 2 642 650
- DE-A- 3 119 343
- DE-A- 4 318 445
- DE-C- 3 418 486
- US-A- 4 570 486
- US-A- 5 661 241

## Beschreibung

Die Erfindung betrifft ein Ultraschallmeßgerät mit Sender und Empfänger für die Ortung der geometrischen Lage der Grenze zwischen einem ersten und einem zweiten Stoff durch Messung und Vergleich der Laufzeiten, die ein von dem Sender ausgesandtes und an der Grenze zum ersten Stoff reflektiertes und an der Grenze zum zweiten Stoff reflektiertes Ultraschallsignal bis zurück zum Empfänger braucht.

Ultraschallmeßgeräte dieser Art sind bekannt (DE 195 26 014 A1). Bei Kenntnis der Ausbreitungsgeschwindigkeit eines Ultraschallsignals in dem ersten Stoff erhält man zuverlässige Ergebnisse über den Abstand von Grenzflächen. Eingesetzt werden solche Ultraschallmeßgeräte zur Wanddickenmessung. Die Messung ist unproblematisch, wenn das an der Grenze zum ersten Stoff reflektierte Ultraschallsignal bereits abgeklungen ist, wenn das an der Grenze zum zweiten Stoff reflektierte Signal den Empfänger wieder erreicht. Diese Voraussetzung ist bei Materialien erfüllt, bei denen die Grenze zum ersten Stoff ausreichend weit von der Grenze zum zweiten Stoff entfernt ist. In diesen Fällen können die einzelnen reflektierten Signale in Abhängigkeit von der Reihenfolge ihres Eintreffens selektiert und den Grenzschichten zugeordnet werden. Nicht gelöst ist bei diesem Stand der Technik das Problem, daß das empfangene Signal ein Mischsignal ist, das aufgrund der geringen Dicke der einzelnen Schichten sich aus den an den verschiedenen Schichten reflektierten Signalen zusammensetzt. Ein solches Signal läßt sich nicht ohne weiteres für die Schichtdickenmessung analysieren.

Zur Dickenmessung mehrschichtiger Kunststoffrohre etc. ist ferner ein Verfahren bekannt (DE 195 34 503 A1), das nicht auf einer Laufzeitmessung, sondern auf der Messung der Signalamplituden des Ultraschallsignals bei Resonanzfrequenz basiert.

Schließlich ist ein Ultraschallmeßverfahren bekannt (DE 34 18 486 C1), das nicht der Dickenmessung dünner Schichten beziehungsweise Wänden dient, sondern der Eliminierung von rückwandnahen Fehlern. Dies geschieht dadurch, daß das reflektierte Signal mit einem Signalmuster verglichen wird, das für den Verlauf des Rückwandechos bis zu seinem größten Amplitudenextremalwert charakteristisch ist.

Der Erfindung liegt die Aufgabe zugrunde, ein Ultraschallmeßgerät zu schaffen, das auch zur Ortung der geometrischen Lage einer Grenze zwischen zwei Stoffen geeignet ist, die sich sehr nah an einem Bezugsort, zum Beispiel an einer anderen Grenze zwischen zwei Stoffen, befindet, so daß das Meßgerät auch in der Lage ist, die Dicke von sehr dünnwandigen Stoffen zu ermitteln.

Diese Aufgabe wird mit einem Ultraschallmeßgerät der eingangs genannten Art dadurch gelöst, daß das Ultraschallmeßgerät dazu ausgelegt ist, um aus dem vom Empfänger aufgenommenen Ultraschallsignal das an der Grenze zum zweiten Stoff reflektierte Ultraschallsignal zu isolieren, um die Differenz aus dem aufgenommenen Ultraschallsignal und einem an der Grenze zum ersten Stoff reflektierten Ultraschallsignal entsprechenden Referenzsignal zu bilden, und um den Zeitpunkt bis zum ersten Signalanstieg dieses Ultraschallsignals und dem Zeitpunkt bis zum ersten Signalanstieg des aufgenommenen Ultraschallsignals die Laufzeit des Ultraschallsignals durch den ersten Stoff zu ermitteln.

Bei der Erfindung wird also aus dem vom Empfänger aufgenommenen Ultraschallsignal, das sich aus den an den beiden Grenzen zum ersten Stoff und vom ersten zum zweiten Stoff reflektierten Ultraschallsignalen zusammensetzt, das an der Grenze zum zweiten Stoff reflektierte Ultraschallsignal herausgefiltert. Wie bei dem bekannten Meßgerät stehen dann zwei eindeutige Signale, das an der Grenze zum ersten Stoff reflektierte Signal und das an der Grenze zum zweiten Stoff reflektierte Signal, für die Laufzeitmessung zur Verfügung.

Unter "Grenze" wird nicht nur eine scharf konturierte Grenze zwischen zwei Stoffen verstanden, sondern auch zum Beispiel Homogenitätsänderungen in einem Stoff, die eine Reflexion des Ultraschallsignals bewirken. Aus dem isolierten Signal läßt sich nicht nur eine Aussage über die örtliche Lage der Grenze vom ersten zum zweiten Stoff zu einem Bezugsort, zum Beispiel über die Dicke des ersten Stoffes machen, sondern auch eine Aussage über den Stoff selbst, und zwar anhand der Amplitude des reflektierten Signals. Das erfindungsgemäße Prinzip der Laufzeitmessung läßt sich nicht nur bei einem einzigen Stoff, sondern auch bei geschichteten Stoffen anwenden. Bei einem aus zwei Lagen bestehenden Stoff erhält man dann neben dem an der Grenze vom ersten zum zweiten Stoff reflektierten Signal ein weiteres an der Grenze vom zweiten zum dritten Stoff reflektiertes Signal. Das Prinzip der Isolierung dieses an der Grenze vom zweiten zum dritten Stoff reflektierten Signals ist gleich dem der Isolierung des von der Grenze vom ersten zum zweiten Stoff reflektierten Signals.

Im folgenden wird die Erfindung anhand von Ultraschallsignalen näher erläutert.

Das erfindungsgemäße Meßgerät weist, wie die herkömmlichen Meßgeräte zur Laufzeitmessung mittels Ultraschalls, einen Sender und einen Empfänger sowie an den auszumessenden Stoff anzukoppelnde Ultraschallkopplungselemente auf. Vom Sender wird in den ersten Stoff ein Ultraschallsignal eingeleitet, das an der ersten Grenze (Eintrittsort) des auszumessenden Stoffes reflektiert wird. Es gelangt aber auch bis an die zweite Grenze des auszumessenden Stoffes, wo es nochmals reflektiert wird und von wo es zum Ausgangspunkt zurückgelangt.

Eine Besonderheit bei dem erfindungsgemäßen Meßgerät ist, daß das empfangene Signal US_{S} zweimal verarbeitet wird. Dazu wird der Zeitpunkt t₁ über den ersten Signalanstieg des Ultraschallsignals beim Eintritt in den ersten Stoff festgehalten. Danach wird aus dem empfangenen Signal USₛ, das ein Mischsignal aus dem an der Grenze zum ersten Stoff reflektierten Restsignal und dem an der Grenze zum zweiten Stoff reflektierten Signal ist, das an der Grenze zum zweiten Stoff reflektierte Signal isoliert. Dies geschieht dadurch, daß das empfangene Signal USₛ mit einem Referenzsignal US_{R}, das einem an der ersten Grenze reflektierten Ultraschallsignal entspricht, überlagert wird. Durch die Überlagerung, und zwar einer Differenzbildung, ergibt sich ein Signal US₂, das dem an der zweiten Grenze reflektierten Signal entspricht. Der Zeitpunkt t₂, ist durch den ersten Signalanstieg des an der Grenze zum zweiten Stoff reflektierten Signals US₂ markiert.

Aus den Zeiten t₁ und t₂ läßt sich die Laufzeit Δₜ für das Ultraschallsignal im auszumessenden Stoff bestimmen und damit bei Kenntnis der Ausbreitungsgeschwindigkeit des Ultraschallsignals in diesem Stoff der geometrische Ort der Grenze, insbesondere die Dicke des auszumessenden Stoffes, aber auch Fehlstellen oder Homogenitätsänderungen.

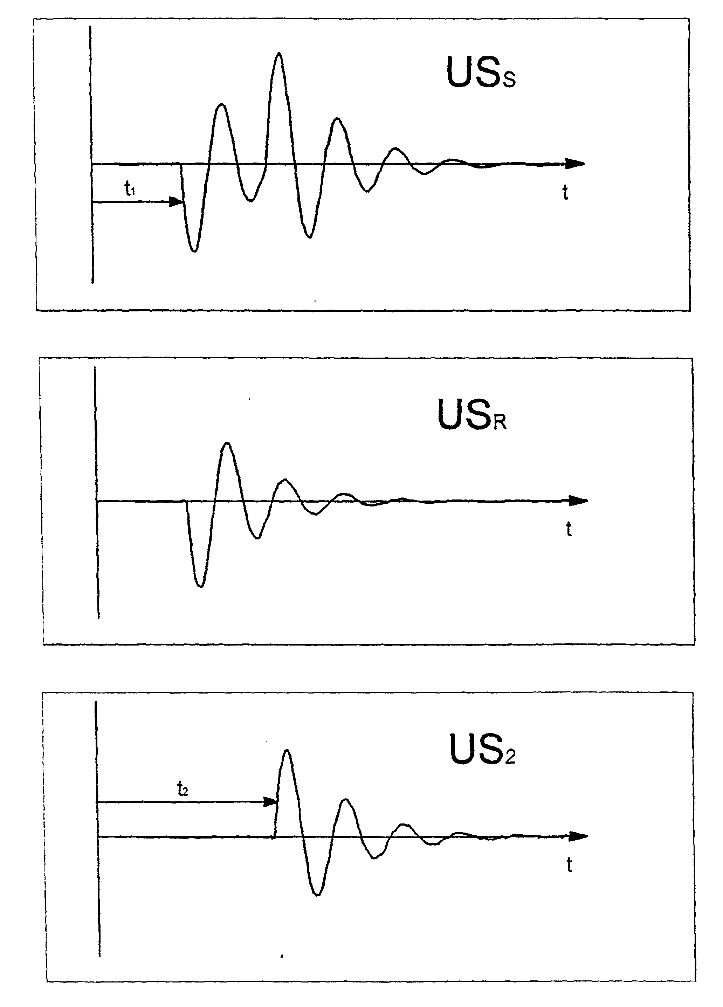

## Patentansprüche

1. Ultraschallmeßgerät mit Sender und Empfänger für die Ortung der geometrischen Lage der Grenze zwischen einem ersten und einem zweiten Stoff durch Messung und Vergleich der Laufzeiten, die ein von dem Sender ausgesandtes und an der Grenze zum ersten Stoff reflektiertes und an der Grenze zum zweiten Stoff reflektiertes Ultraschallsignal (US_{R}, US₂) bis zurück zum Empfänger braucht,
**dadurch gekennzeichnet, daß** des Ultraschallmeßgerät dazu ausgelegt ist, um aus dem vom Empfänger aufgenommenen Ultraschallsignal (US_{S}) das an der Grenze zum zweiten Stoff reflektierte Ultraschallsignal (US₂) zu isolieren, um die Differenz aus dem aufgenommenen Ultraschallsignal (US_{S}) und einem dem an der Grenze zum ersten Stoff reflektierten Ultraschallsignal (US_{R}) entsprechenden Referenzsignal (US₃) zu bilden, und um aus dem Zeitpunkt (t₂) bis zum ersten Signalanstieg dieses Ultraschallsignals (US₂) und dem Zeitpunkt (t₁) bis zum ersten Signalanstieg des aufgenommenen Ultraschallsignals (US_{S}) die Laufzeit des Ultraschallsignals durch den ersten Stoff zu ermitteln.

## Claims

1. Ultrasonic measuring device comprising a transmitter and a receiver for locating the geometric position of the boundary between a first and a second material by measuring and comparing the transit times of an ultrasonic signal (US_{R}, US₂) between its transmission by the transmitter and its reception by the receiver after being reflected on the boundary to the first material and on the boundary to the second material, **characterized by** the fact that the ultrasonic measuring device is designed for isolating the ultrasonic signal (US_{S}) reflected on the boundary to the second material from the ultrasonic signal (US_{S}) recorded by the receiver in order to form the difference between the recorded ultrasonic signal (US_{S}) and a reference signal (US₂) that corresponds to the ultrasonic signal (US_{R}) reflected on the boundary to the first material and in order to determine the transit time of the ultrasonic signal through the first material from the time (t₂) elapsed until the first signal rise of this ultrasonic signal (US₂) and the time (t₁) elapsed until the first signal rise of the recorded ultrasonic signal (US_{S}).

## Revendications

1. Appareil de mesure à ultrason comprenant un émetteur et un récepteur pour le repérage de la position géométrique de la limite entre une première et une deuxième matière, par la mesure et la comparaison des temps de propagation, que nécessite un signal à ultrason (US_{R}, US₂) émis par l'émetteur et réfléchi par la limite vers la première matière et réfléchi par la limite vers la deuxième matière jusqu'au retour au récepteur **caractérisé en ce que**
l'appareil de mesure à ultrason est adapté pour isoler le signal à ultrason (US₂) réfléchi par la limite vers la deuxième matière, à partir du signal à ultrason (US_{S}) capté par le récepteur, pour former la différence à partir du signal à ultrason (US_{S}) capté et d'un signal de référence correspondant au signal à ultrason (US_{R}) réfléchi par la limite vers la première matière et pour déterminer le temps de propagation du signal à ultrason à travers la première matière à partir de l'instant (t₂) de la première montée de signal de ce signal à ultrason (US₂) et de l'instant (t₁) de la première montée de signal du signal à ultrason (US_{S}) capté.
